# FASCICULE DE BREVET EUROPEEN

(11) **EP 3 077 258 B1**
(45) Date de publication et mention de la délivrance du brevet: **13.06.2018**
(21) Numéro de dépôt: 14809462.6
(22) Date de dépôt: 05.11.2014
(51) Int. Cl.: B60W 10/02, B60W 10/18, B60W 30/18

(54) **PROCÉDÉ DE CONTRÔLE DE LA VITESSE EN DESCENTE D'UN VÉHICULE AUTOMOBILE, OUVRANT DANS CERTAINES CONDITIONS LA CHAÎNE DE TRACTION.**
VERFAHREN ZUR STEUERUNG DER ABWÄRTSGESCHWINDIGKEIT EINES KRAFTFAHRZEUGS DURCH DAS ÖFFNEN DES ANTRIEBSSTRANGS UNTER BESTIMMTEN BEDINGUNGEN
METHOD FOR CONTROLLING THE DOWNHILL SPEED OF A MOTOR VEHICLE BY OPENING THE DRIVETRAIN IN CERTAIN CONDITIONS

(30) Priorité: 02.12.2013 FR 1361910
(43) Date de publication de la demande: 12.10.2016
(73) Titulaire: PSA Automobiles SA, 78300 Poissy (FR); Robert Bosch GmbH, 70442 Stuttgart (DE)
(72) Inventeur: GAUDIN, Christelle, F-95330 Domont (FR); BLAISE, Philippe, F-90110 Rougemont Le Chateau (FR); CHARPIN, Emmanuel, F-25750 Desandans (FR)
(74) Mandataire: Rosenberg, Muriel Sylvie
(86) Numéro de dépôt international: PCT/FR2014/052817
(87) Numéro de publication internationale: WO 2015/082785

(56) Documents cités:
- EP-A2- 0 983 894
- DE-A1-102011 080 720
- FR-A1- 2 982 562
- US-A1- 2007 276 576

## Description

La présente invention concerne un procédé de contrôle de la vitesse d'un véhicule automobile en descente, ainsi qu'un véhicule automobile mettant en oeuvre un tel procédé.

Aujourd'hui la plupart des véhicules automobiles comportent un système de freinage comprenant une fonction antiblocage des roues appelée « ABS », permettant d'intervenir individuellement sur les freins de chaque roue pour éviter un blocage de ces roues lors de freinages prononcés ou de faible adhérence de la voie de circulation.

Pour les véhicules comportant une fonction de contrôle de stabilité appelée « ESP », la commande individuelle du freinage des roues de la fonction antiblocage ABS est utilisée aussi pour intervenir sur la stabilité de ce véhicule en freinant des roues, et le maintenir sur la trajectoire souhaitée par le conducteur.

Certains véhicules comportent de plus une fonction de contrôle de la vitesse du véhicule sur une pente appelée « HDC » (Hill Descent Control), ou une fonction d'assistance pour les manoeuvres d'arrêt et de démarrage en pente appelée « HADC » (Hill Assist Descent Control), qui utilise la fonction de contrôle de stabilité ESP pour limiter automatiquement la vitesse de descente du véhicule sur les fortes pentes en agissant sur les freins, tout en le maintenant sur sa trajectoire.

On réalise en particulier avec la fonction HADC, avec l'aide d'informations délivrées par un certain nombre de capteurs sur le fonctionnement du véhicule, et quelle que soit l'adhérence des roues, une assistance à la conduite donnant un maintien automatique de la vitesse du véhicule à une valeur cible prédéterminée.

En complément un type de fonction de contrôle de la descente connu, présenté notamment par le document FR-A1-2982562, réalise quand il constate que la transmission est au moins partiellement ouverte, un abaissement du seuil minimum de vitesse appliqué à la vitesse contrôlé, qui vient en dessous de la valeur prédéfinie dépendant de la vitesse de rotation minimum du moteur thermique pour éviter son calage, et du rapport de transmission engagé.

On obtient ainsi une vitesse qui peut être inférieure à la valeur prédéfinie minimum, pour améliorer le contrôle de cette vitesse dans des conditions de faible adhérence.

Cependant cette fonction dépend de l'état au moins partiellement ouvert de la transmission qui est commandé par le conducteur dans le cas d'une boîte de vitesses manuelle, ou par les propres lois de pilotage normalement mises en oeuvre par le calculateur de contrôle de cette transmission dans le cas où elle est automatisée. Dans des circonstances délicates on peut ne pas obtenir l'abaissement du seuil minimum de vitesse, si on n'a pas cet état au moins partiellement ouvert.

Pour obtenir l'abaissement du seuil minimum de vitesse le conducteur peut alors commander une ouverture de la transmission, soit sur sa propre décision, ou soit après une alerte donnée par une interface homme-machine. Dans ces différents cas il faut que le conducteur intervienne, ce qui peut causer des désagréments, ou même être dangereux s'il n'agit pas assez vite.

Le document EP-A-0 983 894 divulgue un procédé de contrôle de la vitesse en descente d'un véhicule automobile conforme au préambule de la revendication 1.

La présente invention a notamment pour but d'éviter ces inconvénients de la technique antérieure.

Elle propose à cet effet un procédé de contrôle de la vitesse en descente d'un véhicule automobile conforme à la revendication 1.

Un avantage de ce procédé de contrôle est que dans des conditions délicates comme une faible adhérence détectée ou une pente suffisamment forte, on obtient automatiquement sans intervention du conducteur une diminution de la vitesse cible de descente en dessous de la valeur prédéfinie minimum, qui est permise par l'ouverture de la chaîne de traction.

Le procédé de contrôle de la vitesse selon l'invention peut en outre comporter une ou plusieurs des caractéristiques suivantes, qui peuvent être combinées entre elles.

Avantageusement, le procédé met en oeuvre une boucle complémentaire établissant sa robustesse, utilisant des informations sur l'environnement extérieur du véhicule.

Dans ce cas, les informations sur l'environnement extérieur du véhicule peuvent être données par une caméra, par des radars, par des mesures de distance par ultrasons, ou par un GPS indiquant une position du véhicule.

La fonction de confirmation ou d'anticipation d'ouverture ou de fermeture peut ensuite établir une anticipation du changement d'état de la chaîne de traction, ou une confirmation de son état ne changeant pas, qui est délivrée à une fonction de sévérité des critères.

Avantageusement, la fonction de sévérité des critères reçoit de plus l'estimation de la pente ainsi que le calcul de la dérivée de cette pente, pour confirmer ou modifier le choix fait par la fonction établissant la consigne d'ouverture ou de fermeture de la chaîne de traction.

L'invention a aussi pour objet un véhicule automobile équipé d'une fonction du type « ESP » de contrôle de la stabilité du véhicule, qui comporte des moyens mettant en oeuvre un procédé de contrôle de la vitesse en descente comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma présentant une fonction de contrôle de vitesse en descente HADC mettant en oeuvre un procédé suivant l'invention ; et
- la figure 2 est un schéma présentant le fonctionnement de ce procédé.

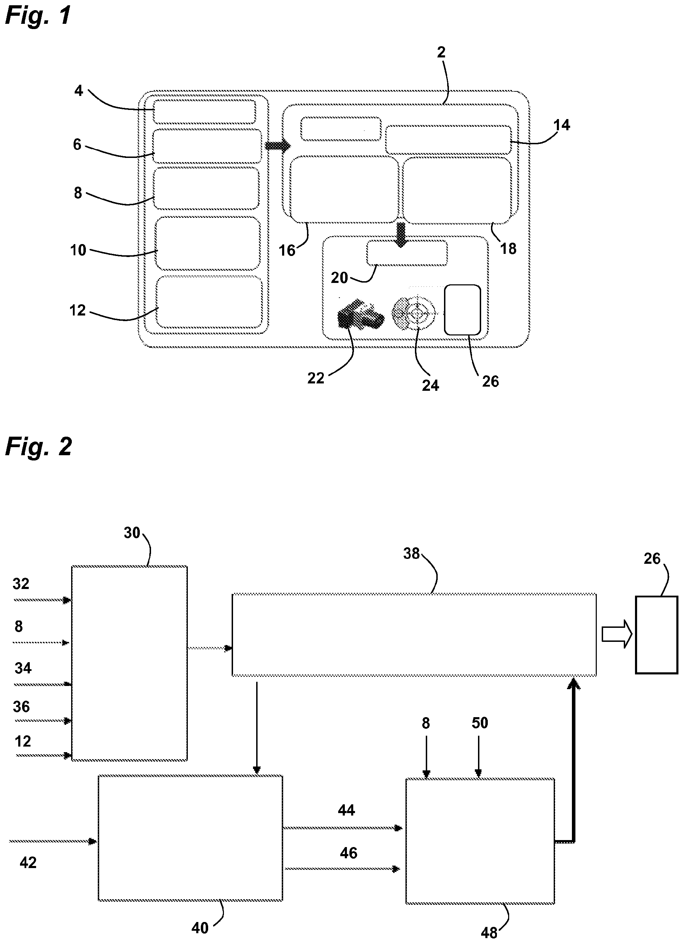

La figure 1 présente un calculateur 2 d'un système de contrôle de stabilité du véhicule ESP, recevant des informations sur le fonctionnement du véhicule données par différents capteurs 4 comprenant notamment l'angle du volant de direction ou une information équivalente, sur la vitesse de chaque roue 6, sur une estimation de la pente mesurée suivant différents axes 8 ou une information équivalente, sur l'environnement extérieur au véhicule 10 données par exemple par des caméras, des radars établissant une proximité, des mesures de distance par ultrasons, ou un GPS indiquant une position du véhicule, et sur la volonté du conducteur exprimée par la position de la pédale d'accélérateur 12.

Ces différentes informations généralement accessibles sur le réseau de transmission d'informations numériques du véhicule, du type « CAN », font l'objet de calculs 14 pour déterminer après le relâchement de la pédale d'accélérateur, les conditions d'entrée 16 ou de sortie 18 d'une fonction de contrôle de vitesse en descente HADC.

La fonction de contrôle de vitesse en descente HADC commande alors le groupe hydraulique 22 agissant sur les moyens de freinage de chaque roue 24, afin d'obtenir une vitesse cible du véhicule suffisamment basse qui assure sa stabilité, en prenant en compte en particulier l'adhérence de ses roues ainsi que la valeur de la pente.

La chaîne de traction du véhicule 26 reliant le moteur thermique aux roues motrices, dispose d'une commande automatisée qui peut effectuer son ouverture au moins partielle. Cette chaîne de traction peut comporter notamment une boîte de vitesses robotisée qui est ouverte par une commande de son embrayage, ou par un passage au point mort, une transmission automatique, ou une transmission à variation continue.

En particulier dans le cas d'une ouverture partielle de la chaîne de traction 26, il peut y avoir un certain glissement dans cette chaîne, donné par exemple par le frottement d'un embrayage.

Quand la chaîne de traction 36 est fermée, on obtient alors nécessairement une vitesse cible de descente fixée par la fonction de contrôle de vitesse HADC, qui est supérieure ou égale à la valeur prédéfinie minimum de vitesse fixée par le rapport de transmission engagé, et par la vitesse de rotation minimum du moteur pour éviter son calage.

Dans le cas où la valeur prédéfinie minimum de vitesse de descente est estimée comme étant trop élevée pour assurer la descente du véhicule dans de bonnes conditions de stabilité et de sécurité, le procédé selon l'invention impose alors automatiquement l'ouverture de la chaîne de traction 26, et établit une nouvelle vitesse cible inférieure à cette valeur prédéfinie.

La figure 2 présente une fonction de détection de comportement du véhicule 30, qui reçoit des informations sur l'état de la fonction de contrôle de vitesse HADC 32, sur l'estimation de la pente 8, sur la vitesse du véhicule 34, sur l'état de la transmission de la chaîne de traction 36, et sur la position de la pédale d'accélérateur 12.

La fonction de détection de comportement du véhicule 30 transmet alors suivant ce comportement, une information à une fonction 38 établissant une consigne d'ouverture ou de fermeture de la chaîne de traction, qui est délivrée à la chaîne de traction 26.

On obtient alors suivant le cas automatiquement de manière auto-adaptative une ouverture de la chaîne de traction 26 qui désolidarise le moteur thermique des roues motrices, et permet une vitesse cible inférieure à la valeur prédéfinie minimum de vitesse sans caler le moteur thermique. On obtient aussi automatiquement si les conditions de roulage changent et que la vitesse du véhicule peut repasser au-dessus de la valeur prédéfinie minimum, une fermeture de cette chaîne de traction qui permet de continuer la descente en utilisant le frein moteur.

Dans tous les cas le confort ainsi que la sécurité sont assurés, sans intervention du conducteur. De plus on peut se passer d'une commande formant une interface homme machine « IHM », qui demanderait cette ouverture de la chaîne de traction.

La fonction établissant la consigne d'ouverture ou de fermeture 38 envoie aussi une information à une fonction 40 de confirmation ou d'anticipation de cette ouverture ou fermeture, qui reçoit de plus des informations complémentaires sur l'environnement extérieur du véhicule 42 pour rendre robuste la consigne, et éviter des erreurs ou une instabilité.

Ces informations complémentaires 42 peuvent être en particulier celles reçues par le calculateur 2 du système de contrôle de stabilité du véhicule ESP, sur l'environnement extérieur au véhicule 10.

La fonction de confirmation ou d'anticipation 40 établit une anticipation du changement d'état 44 de la chaîne de traction 26, qui passe à ouvert ou fermée si elle était respectivement fermée ou ouverte, ou une confirmation de son état 46 ne changeant alors pas, qui est délivrée à une fonction de sévérité des critères 48.

La fonction de sévérité des critères 48 reçoit de plus l'estimation de la pente 8 ainsi que le calcul de la dérivée de cette pente 50, pour confirmer ou modifier le choix fait par la fonction établissant la consigne d'ouverture ou de fermeture 38, et lui envoyer. On forme ainsi avec les informations sur l'environnement extérieur du véhicule 42, une boucle complémentaire établissant la robustesse du procédé.

Le procédé de contrôle selon l'invention peut facilement être ajouté de manière économique sur un véhicule déjà équipé d'une fonction de contrôle de vitesse sur une pente HADC, en utilisant des informations données par des capteurs existants et disponibles sur le réseau CAN, et en ajoutant des logiciels dans le calculateur de contrôle de cette fonction.

Ce procédé convient en particulier pour les véhicules à deux ou quatre roues motrices prévus pour rouler en tout-chemin ou en tout-terrain, notamment les véhicules de loisir appelés « Sport Utility Vehicle » (SUV), ou « Crossover ».

## Revendications

1. Procédé de contrôle de la vitesse en descente d'un véhicule automobile disposant d'un moteur thermique équipé d'une chaîne de traction (26) comportant une commande automatisée de son ouverture, et d'une fonction du type « ESP » réalisant un freinage indépendant des roues pour contrôler la stabilité du véhicule, ce procédé limitant dans les descentes quand le conducteur relâche la pédale d'accélérateur, la vitesse du véhicule à une vitesse cible en agissant sur les freins des roues (24), dans lequel dans certaines conditions de risque de perte de contrôle de la vitesse dépendant notamment de la pente (8) ou de l'adhérence des roues, il commande automatiquement une ouverture au moins partielle de la chaîne de traction (26), puis un abaissement de la vitesse cible en dessous de la valeur prédéfinie minimum fixée par le rapport de transmission engagé et la vitesse de rotation minimum du moteur pour éviter son calage, ledit procédé comportant une fonction de confirmation ou d'anticipation d'ouverture ou de fermeture (40) de la chaîne de traction (26), **caractérisé en ce qu'**il utilise des informations sur l'environnement extérieur du véhicule (42), **en ce qu'**il met en oeuvre une fonction de détection de comportement du véhicule (30), qui reçoit des informations sur l'état d'une fonction de contrôle de vitesse « HADC » (32), sur l'estimation de la pente (8), sur la vitesse du véhicule (34), sur l'état de la chaîne de traction (36) et sur la position de la pédale d'accélérateur (12), pour transmettre une information à une fonction établissant une consigne d'ouverture ou de fermeture de la chaîne de traction (38), qui est délivrée à cette chaîne de traction (26) et **en ce que** la fonction de confirmation ou d'anticipation d'ouverture ou de fermeture (40) de la chaîne de traction (26) reçoit une information de la fonction établissant la consigne d'ouverture ou de fermeture (38), ainsi que les informations sur l'environnement extérieur du véhicule (42).

2. Procédé de contrôle selon la revendication 1, **caractérisé en ce que** les informations sur l'environnement extérieur du véhicule (42) sont données par une caméra, par des radars, par des mesures de distance par ultrasons, ou par un GPS indiquant une position du véhicule.

3. Procédé de contrôle selon la revendication 1 ou 2, **caractérisé en ce que** la fonction de confirmation ou d'anticipation d'ouverture ou de fermeture (40) établit une anticipation (44) du changement d'état de la chaîne de traction (26), ou une confirmation de son état ne changeant pas (46), qui est délivrée à une fonction de sévérité des critères (48).

4. Procédé de contrôle selon la revendication 3, **caractérisé en ce que** la fonction de sévérité des critères (48) reçoit de plus l'estimation de la pente (8) ainsi que le calcul de la dérivée de cette pente (50), pour confirmer ou modifier le choix fait par la fonction établissant la consigne d'ouverture ou de fermeture de la chaîne de traction (38).

5. Véhicule automobile équipé d'une fonction du type « ESP » de contrôle de la stabilité du véhicule, **caractérisé en ce qu'**il comporte des moyens mettant en oeuvre un procédé de contrôle de la vitesse en descente réalisé selon l'une quelconque des revendications précédentes.

## Patentansprüche

1. Verfahren zur Steuerung der Abwärtsgeschwindigkeit eines Kraftfahrzeugs, das über einen Verbrennungsmotor verfügt, der mit einem Antriebsstrang (26) ausgestattet ist, der eine automatisierte Steuerung seines Öffnens umfasst, und eine Funktion des Typs "ESP", die ein unabhängiges Bremsen der Räder ausführt, um die Stabilität des Fahrzeugs zu steuern, wobei das Verfahren in den Abwärtsfahrten, wenn der Fahrer das Gaspedal freigibt, die Geschwindigkeit des Fahrzeugs auf eine Zielgeschwindigkeit verringert, indem es auf die Bremsen der Räder (24) einwirkt, wobei es unter bestimmten Bedingungen der Verlustgefahr der Kontrolle über die Geschwindigkeit, die insbesondere von dem Gefälle (8) oder der Haftung der Räder abhängen, automatisch ein mindestens teilweises Öffnen des Antriebsstrangs (26), dann ein Senken der Zielgeschwindigkeit unter den vorbestimmten Mindestwert, der in Bezug auf den eingelegten Gang und die Mindestgeschwindigkeit des Motors festgelegt ist, um sein Abwürgen zu verhindern, steuert, wobei das Verfahren eine Bestätigungs- oder Öffnungsvorwegnahme-oder Schließfunktion (40) des Antriebsstrangs (26) umfasst, **dadurch gekennzeichnet, dass** es Informationen über die äußere Umgebung des Fahrzeugs (42) verwendet, dass es eine Verhaltenserfassungsfunktion des Fahrzeugs (30) umsetzt, die Informationen über den Zustand einer Geschwindigkeitssteuerfunktion "HADC" (32), auf der Schätzung des Gefälles (8), auf der Geschwindigkeit des Fahrzeugs (34), auf dem Zustand des Antriebsstrangs (36) und auf der Position des Gaspedals (12), empfängt, um eine Information zu einer Funktion zu übertragen, die einen Öffnungs- oder Schließsollwert des Antriebsstrangs (38) ermittelt, der zu diesem Antriebsstrang (26) geliefert wird, und dass die Bestätigungs- oder Öffnungsvorwegnahme- oder Schließfunktion (40) des Antriebsstrangs (26) eine Information der Funktion empfängt, die den Öffnungs-oder Schließsollwert (38) ermittelt, sowie Informationen über die äußere Umgebung des Fahrzeugs (42) .

2. Steuerverfahren nach Anspruch 1, **dadurch gekennzeichnet, dass** die Informationen über die äußere Umgebung des Fahrzeugs (42) von einer Kamera, einem Radar, durch Ultraschall-Entfernungsmessungen oder von einem GPS, das eine Position des Fahrzeugs angibt, gegeben werden.

3. Steuerverfahren nach Anspruch 1 oder 2, **dadurch gekennzeichnet, dass** die Bestätigungs- oder Öffnungsvorwegnahme- oder Schließfunktion (40) eine Vorwegnahme (44) des Zustandswechsel des Antriebsstrangs (26) ermittelt, oder eine Bestätigung, dass sein Zustand nicht wechselt (46), die zu einer Schwerefunktion der Kriterien (48) geliefert wird.

4. Steuerverfahren nach Anspruch 3, **dadurch gekennzeichnet, dass** die Schwerefunktion der Kriterien (48) außerdem die Schätzung des Gefälles (8) sowie die Berechnung der Drift dieses Gefälles (50) empfängt, um die Auswahl, die von der Funktion, die den Öffnungs-oder Schließsollwert des Antriebsstrangs (38) ermittelt, zu bestätigen oder zu ändern.

5. Kraftfahrzeug, das mit einer Funktion des Typs "ESP" zur Steuerung der Stabilität des Fahrzeugs ausgestattet ist, **dadurch gekennzeichnet, dass** es Mittel umfasst, die ein Steuerverfahren der Abwärtsgeschwindigkeit, das gemäß einem der vorhergehenden Ansprüche ausgeführt wird, umsetzen.

## Claims

1. A method for controlling the downhill speed of a motor vehicle having a heat engine equipped with a drivetrain (26) comprising an automated control of its opening, and of a function of the "ESP" type realizing an independent braking of the wheels for controlling the stability of the vehicle, this method limiting during downhill travel, when the driver releases the accelerator pedal, the speed of the vehicle to a target speed, by acting on the brakes of the wheels (24), in which in certain conditions of risk of a loss of control of the speed depending in particular on the slope (8) or on the grip of the wheels, it automatically controls an at least partial opening of the drivetrain (26), then a lowering of the target speed below the predefined minimum value fixed by the engaged transmission ratio and the minimum rotation speed of the engine to prevent its stalling, said method comprising a function of confirmation or of anticipation of opening or closing (40) of the drivetrain (26), **characterized in that** it uses information concerning the exterior environment of the vehicle (42), **in that** it implements a detection function of the behaviour of the vehicle (30), which receives information concerning the status of a speed control function "HADC" (32), the estimation of the slope (8), the speed of the vehicle (34), the status of the drivetrain (36) and the position of the accelerator pedal (12), to transmit information to a function establishing an opening or closing setpoint of the drivetrain (38), which is delivered to this drivetrain (26), and **in that** the function of confirmation or of anticipation of the opening or closing (40) of the drivetrain (26) receives information of the function establishing the opening or closing setpoint (38), and information concerning the exterior environment of the vehicle (42).

2. The method for controlling according to claim 1, **characterized in that** the information concerning the exterior environment of the vehicle (42) is given by a camera, by radars, by ultrasonic distance measurements, or by a GPS indicating a position of the vehicle.

3. The method for controlling according to claim 1 or 2, **characterized in that** the function of confirmation or of anticipation of opening or of closing (40) establishes an anticipation (44) of the change of status of the drivetrain (26), or a confirmation of its status not changing (46), which is delivered to a function of severity of the criteria (48).

4. The method for controlling according to claim 3, **characterized in that** the function of severity of the criteria (48) receives in addition the estimation of the slope (8) and also the calculation of the derivative of this slope (50), to confirm or modify the choice made by the function establishing the opening or closing setpoint of the drivetrain (38).

5. A motor vehicle equipped with a function of the "ESP" type for controlling the stability of the vehicle, **characterized in that** it comprises means implementing a method for controlling the downhill speed realized according to any one of the preceding claims.
